# EUROPEAN PATENT APPLICATION

(11) **EP 4 604 193 A1**
(43) Date of publication of application: **20.08.2025**
(21) Application number: 22968860.1
(22) Date of filing: 20.12.2022
(51) Int. Cl.: H01M 4/13

(54) **BATTERY CELL, BATTERY, AND ELECTRIC DEVICE**

(71) Applicant: Contemporary Amperex Technology (Hong Kong) Limited, Central (HK)
(72) Inventor: XU, Xiaofu, Ningde, Fujian 352100 (CN); CHEN, Jiahua, Ningde, Fujian 352100 (CN); LI, Quanguo, Ningde, Fujian 352100 (CN); JIN, Haizu, Ningde, Fujian 352100 (CN); OUYANG, Chuying, Ningde, Fujian 352100 (CN); ZHAO, Fenggang, Ningde, Fujian 352100 (CN)
(74) Representative: Gong, Jinping
(86) International application number: PCT/CN2022/140473
(87) International publication number: WO 2024/130558

(57) **Abstract**

The present disclosure discloses a battery cell (100), a battery (2000), and an electrical device. The battery cell (100) includes an electrode assembly (200). The electrode assembly (200) includes a first electrode plate. The first electrode plate includes a first substrate (11). The first substrate (11) includes a first insulation layer (12) at an edge of the first substrate (11).

## Description

### FIELD

The present disclosure relates to the field of battery technologies, and more particularly, to a battery cell, a battery, and an electrical device.

### BACKGROUND

Energy conservation and emission reduction are the key to the sustainable development of the automobile industry. Electric vehicles have become an important part of the sustainable development of the automobile industry due to their advantages in energy conservation and environmental protection. For the electric vehicles, a battery technology is an important factor related to their development.

In the development of the battery technology, reliability of a battery is an extremely important design factor. During production and fitting of the battery, a problem such as a short circuit is prone to occur in the battery, which affects reliability of the battery.

### SUMMARY

In view of the above problems, the present disclosure provides a battery cell, a battery, and an electrical device, which can reduce a probability of a short circuit in the battery cell to improve reliability of the battery cell.

In a first aspect, the present disclosure provides a battery cell. The battery cell includes an electrode assembly. The electrode assembly includes a first electrode plate. The first electrode plate includes a first substrate. The first substrate includes a first insulation layer at an edge of the first substrate.

In the technical solution of an embodiment of the present disclosure, by disposing the first insulation layer at the edge of the first substrate, the first insulation layer can cover a fin at the edge of the first substrate. Therefore, a problem caused by the fin can be improved, and a risk of the short circuit caused by the fin piercing a barrier is reduced. As a result, the probability of the short circuit in the battery cell is reduced to improve the reliability of the battery cell.

In some embodiments, the first substrate has two opposite sides. One of the two opposite sides is connected to a first tab. The first insulation layer is disposed at each of the two opposite sides of the first substrate. In the above technical solution, by disposing the first insulation layer at the side of the first tab and the opposite side of the first tab, a probability of a short circuit due to a contact between the positive electrode plate and the negative electrode plate, which is caused by metal deposition of the negative electrode plate at the edge of the negative electrode plate, can be reduced, or a probability of a short circuit due to the contact between the positive plate and the negative electrode plate, which is caused by dendrites from metal deposition piercing the barrier, can be reduced to improve the reliability of the battery cell.

In some embodiments, when the battery cell is applied in an electrical device, the first insulation layer is disposed at an edge of an upper side of the first substrate and an edge of a lower side of the first substrate. In the above technical solution, during an actual application of the battery cell, metal precipitated during charging of the battery cell is easy to gather on a lower side of the electrode plate to form the metal dendrites. By disposing the first insulation layer at the edge of the upper side of the first substrate and the edge of the lower side of the first substrate, the probability of the short circuit due to the contact between the positive electrode plate and the negative electrode plate can be reduced. The first insulation layer is disposed at each of the upper edge of the first electrode plate and the lower edge of the first electrode plate, which can be adapted to various placement scenarios of the battery cell applied in the electrical device.

In some embodiments, the first insulation layer is of an annular shape extending along an outer periphery of the first substrate. In the above technical solution, the first insulation layer can improve the problem of cutting the fin on the first substrate on the one hand, and can realize the insulation design of the entire periphery of the first substrate on the other hand, thereby reducing the probability of the short circuit due to the contact between the positive negative electrode plate and the negative electrode plate in a circumferential direction of the first substrate.

In some embodiments, the first insulation layer has a thickness greater than or equal to 0.5 µm. In the above technical solution, the first insulation layer can provide an effective and reliable insulation effect.

In some embodiments, the first electrode plate includes an active material layer disposed at the first substrate. A ratio of a thickness of the first insulation layer to a thickness of the active material layer ranges from 0.1 to 20. In the above technical solution, the first insulation layer can provide the effective insulation effect. At the same time, production of the first insulation layer is facilitated, and a probability of curling of the first electrode plate is reduced.

In some embodiments, the first substrate is coated with a conductive coating at a surface of the first substrate. A ratio of a thickness of the first insulation layer to a thickness of the conductive coating ranges from 0.1 to 20. In the above technical solution, the first insulation layer can provide the effective insulation effect. At the same time, the production of the first insulation layer is facilitated, and the probability of the curling of the first electrode plate is reduced.

In some embodiments, the electrode assembly further includes a barrier. The first insulation layer abuts with the barrier. In the above technical solution, a gap between the first insulation layer and the barrier can be reduced to lower an impact on reliability of the battery cell when the metal deposited at the negative electrode plate is squeezed and extruded from the gap.

In some embodiments, the first insulation layer is connected to the barrier. In the above technical solution, the risk of the short circuit, which is caused by the extrusion of the metal deposited at the negative electrode plate from between the first insulation layer and the barrier, can be further reduced.

In some embodiments, the first insulation layer protrudes from a surface of the first substrate. In the above technical solution, protruding the first insulation layer from the surface of the first substrate can reduce the gap between the first substrate and the barrier, forming effective blocking that reduces the risk of the short circuit due to the contact between the positive negative electrode plate and the negative electrode plate through the metal. At the same time, it facilitates formation of the first insulation layer.

In some embodiments, the first insulation layer has a thickness gradually decreasing in a direction approaching the edge of the first substrate. In the above technical solution, an inclined surface is formed at a side of the first insulation layer, and therefore, on a basis of achieving the effective insulation, a bulging phenomenon caused by the squeezing of the first insulation layer during production and fitting of the first insulation layer can be mitigated.

In some embodiments, the first insulation layer is flush with a surface of the first substrate. In the above technical solution, space occupied by the first electrode plate in a thickness direction of the first electrode plate can be reduced with an improvement in energy density.

In some embodiments, the first substrate has a groove or a hole at the edge of the first substrate, an insulation material being poured into the groove or the hole to form the first insulation layer. In the above technical solution, space can be reserved for the first insulation layer on the first substrate to facilitate formation of the first insulation layer on the first substrate.

In some embodiments, the first insulation layer is disposed on each of two surfaces of the first substrate in a thickness direction of the first substrate. In the above technical solution, the insulation design for each of the two side surfaces of the first substrate can reduce the probability of the short circuit due to the contact between the positive negative electrode plate and the negative electrode plate, which is caused by the fin piercing the barrier, or the probability of the short circuit due to the contact between the positive negative electrode plate and the negative electrode plate through the metal, to improve the reliability of battery cell.

In some embodiments, the electrode assembly further includes a second electrode plate. The second electrode plate includes a second substrate. An area of the first substrate is equal to an area of the second substrate. In the above technical solution, by designing the two substrates as structural members of equal area, formation of the two electrode plates can be facilitated. For example, cutters of a same size can be used for cutting. In addition, by designing the substrate of the positive electrode plate and the substrate of the negative electrode plate in the same size, a proportion of an active material can be increased to improve the energy density.

In some embodiments, the first insulation layer includes at least one of a ceramic coating, a mica coating, a glass coating, nylon, a plastic film layer composite structure, and a coating of a barrier. In the above technical solution, the first insulation layer can provide the insulation effect.

In some embodiments, the electrode assembly further includes a second electrode plate. The second electrode plate includes a second substrate. The first electrode plate is a positive electrode plate and includes a positive active material layer. The second electrode plate is a negative electrode plate. A projection of the positive active material layer on a plane where the second electrode plate is located falls within the second electrode plate. In the above technical solution, on the one hand, disposing the first insulation layer at the substrate of the positive electrode plate can reduce the probability of the short circuit due to the contact between the positive negative electrode plate and the negative electrode plate, which is caused by the fin at the edge of the substrate of the positive electrode plate piercing the barrier to be in contact with the positive electrode plate. On the other hand, the metal deposited at the negative electrode plate generates the dendrites to be in contact with the insulation layer when the dendrites are in contact with the positive electrode plate, which can reduce the risk of the short circuit due to the connection between the positive negative electrode plate and the negative electrode plate through the meal, to improve the reliability of the battery cell.

In some embodiments, a width of the first insulation layer is d, and a size of a part of the second electrode plate extending beyond the positive active material layer at a side of the first electrode plate where the first insulation layer is disposed is D, where 0.5mm≤d≤D. In the above technical solution, due to a conical diffusion trend of the metal towards the negative electrode plate, with the width of the insulation layer above 0.5 mm, the deposition and the precipitation of metal on the negative electrode plate can be reduced, and the probability of the short circuit due to the contact between the positive negative electrode plate and the negative electrode plate can be reduced. At the same time, by limiting the width of the first insulation layer within a range of the part of the second electrode plate extending beyond the positive active material layer, cost is lowered while reducing the probability of the short circuit, and the energy density of the battery cell can be improved.

In some embodiments, the first electrode plate further includes a first tab disposed at a side of the first substrate in a first direction. The first insulation layer is of an annular shape extending along an outer periphery of the first substrate. A width of the first insulation layer in the first direction is greater than a width of the first insulation layer in a second direction. The second direction is perpendicular to the first direction. In the above technical solution, capacity of the battery cell can be increased on the basis of achieving effective insulation protection.

In some embodiments, the first substrate has two opposite sides. One of the two opposite sides of the first substrate is connected to a first tab. The first insulation layer is disposed at each of the two opposite sides of the first substrate. A width of the first insulation layer at a side of the first insulation layer close to the first tab is B1, and a width of the first insulation layer at a side of the first insulation layer away from the first tab is B2. A ratio of B1 to B2 ranges from 0.7 to 1.2. In the above technical solution, on the basis of achieving effective insulation protection, an excess width of the first insulation layer can be avoided, thereby alleviating a problem of energy density decreased because of too much space occupied by the first insulation layer.

In some embodiments, the first substrate has two opposite sides. One of the two opposite sides of the first substrate is connected to a first tab. The first insulation layer is disposed at a side of the first substrate close to the first tab, an edge of the side of the first substrate close to the first tab is flush with an edge of a side of the second substrate close to the first tab; and/or the first insulation layer is disposed at a side of the first substrate away from the first tab, an edge of the side of the first substrate away from the first tab is flush with an edge of a side of the second substrate away from the first tab. In the above technical solution, the first insulation layer of the positive electrode plate may be disposed closer to the edge of the substrate of the negative electrode plate, and a size of a part of the substrate of the positive electrode plate where no first insulation layer is disposed can be enlarged as much as possible to increase capacity for accommodating the positive active material layer and improve the energy density of the battery cell.

In some embodiments, the first electrode plate is a negative electrode plate; and the electrode assembly further includes a second electrode plate that is a positive electrode plate and includes a positive active material layer. The first substrate has a size larger than a size of the second electrode plate. The first insulation layer is disposed at a part of the first substrate extending beyond the positive active material layer. In the above technical solution, the insulation layer is disposed at the substrate of the negative electrode plate. On the one hand, the probability of the fin at the edge of the substrate of the negative electrode plate piercing the barrier and being in contact with the positive electrode plate can be reduced, thereby reducing the risk of the short circuit due to the contact between the positive negative electrode plate and the negative electrode plate. On the other hand, the metal deposition at the edge of the substrate of the negative electrode plate can be reduced. Therefore, the blocking is formed, which reduces the probability of the short circuit due to the contact between the positive negative electrode plate and the negative electrode plate, and improves the reliability of the battery cell.

In some embodiments, the first insulation layer is disposed at a part of the first substrate extending beyond the positive active material layer. In the above technical solution, the metal deposited at the part of the substrate of the negative electrode plate extending beyond the positive active material layer can be effectively reduced, thereby greatly reducing the probability of the short circuit due to the contact between the positive negative electrode plate and the negative electrode plate.

In some embodiments, the electrode assembly further includes a second electrode plate. The second electrode plate includes a second substrate. The second substrate includes a second insulation layer at an edge of the second substrate. In the above technical solution, by disposing the second insulation layer at each edge of the second substrate, the second insulation layer can shield the fin at the edge of the second substrate. Therefore, the problem caused by the fin can be improved, and the risk of the short circuit caused by the fin piercing a barrier is reduced. Since the insulation layer is disposed at the edge of each of the two substrates, the probability of the short circuit in the battery can be further reduced to improve the reliability of the battery.

In some embodiments, the second insulation layer is of an annular shape extending along an outer periphery of the second substrate. In the above technical solution, the second insulation layer of the annular shape can improve the problem of cutting the fin on the second substrate on the one hand, and can realize the insulation design of the entire periphery of the second substrate on the other hand, thereby reducing the probability of the short circuit due to the contact between the positive negative electrode plate and the negative electrode plate in a circumferential direction of the second substrate can be reduced.

In some embodiments, the first electrode plate is a negative electrode plate, and the second electrode plate is a positive electrode plate and includes a positive active material layer. A boundary of a projection of the positive active material layer on the first electrode plate falls within a region of the first substrate where no first insulation layer is disposed. In the above technical solution, the insulation layer is disposed at the substrate of each of the positive negative electrode plate and the negative electrode plate. With the size of the part of the substrate of the negative electrode plate where no first insulation layer is disposed being greater than or equal to the size of the positive active material layer, the negative electrode plate can have enough space to accommodate the diffused active material, and charging operation and discharging operation of the battery cell are reliable.

In a second aspect, the present disclosure provides a battery. The battery includes the battery cell in the above embodiments.

In a fourth aspect, the present disclosure provides an electrical device. The electrical device includes the battery cell in the above embodiments. The battery cell is configured to provide electric energy.

The above description is only an overview of the technical solutions of the present disclosure. In order to have a clearer understanding of the technical means of the present disclosure, the technical solutions can be implemented in accordance with the contents of the specification. Moreover, in order to make the above and other purposes, features and advantages of the present disclosure are more obvious and easy to understand, specific embodiments of the present disclosure are given below.

### BRIEF DESCRIPTION OF THE DRAWINGS

Various other advantages and benefits will become apparent to those skilled in the art after reading the detailed description of preferred embodiments given below. The accompanying drawings are used for a purpose of illustrating the preferred embodiments only, rather than limiting the present disclosure. Moreover, throughout the accompanying drawings, same elements are denoted by same reference numerals.
FIG. 1 is a schematic diagram of a vehicle in the related art.
FIG. 2 is a schematic diagram of a battery in related art.
FIG. 3 is a schematic diagram of a battery cell according to some embodiments of the present disclosure.
FIG. 4 is a schematic diagram of a first electrode plate according to some embodiments of the present disclosure.
FIG. 5 is a schematic cross-sectional view of a first electrode plate according to some embodiments of the present disclosure.
FIG. 6 is a schematic cross-sectional view of a first electrode plate according to some other embodiments of the present disclosure.
FIG. 7 is a schematic diagram of stacking of a first electrode plate and a second electrode plate according to some embodiments of the present disclosure.
FIG. 8 is a schematic cross-sectional view of a first electrode plate, a second electrode plate, and a barrier according to some embodiments of the present disclosure.
FIG. 9 is a schematic cross-sectional view of a first electrode plate, a second electrode plate, and a barrier according to some other embodiments of the present disclosure.
FIG. 10 is a schematic cross-sectional view of a first electrode plate, a second electrode plate, and a barrier according to yet some other embodiments of the present disclosure.
FIG. 11 is an exploded view of the first electrode plate, the second electrode plate, and the barrier according to the embodiments illustrated in FIG. 10.
FIG. 12 is a cross-sectional view of a first electrode plate according to some embodiments of the present disclosure.
FIG. 13 is a cross-sectional view of a first electrode plate according to some other embodiments of the present disclosure.
FIG. 14 is a cross-sectional view of the first electrode plate according to yet some other embodiments of the present disclosure.
FIG. 15 is a schematic view of a first electrode plate according to some other embodiments of the present disclosure.
FIG. 16 is a schematic view of a first insulation layer according to some embodiments of the present disclosure.

### Reference numerals:

vehicle 1000, controller 200, motor 300, battery 2000, shell 400, first part 410, second part 420,
battery cell 100, electrode assembly 200, positive electrode plate a, negative electrode plate b, barrier c, positive active material layer e,
first substrate 11, groove 111, hole 112, first insulation layer 12, protrusion 121, first tab 13, conductive coating 14,
second substrate 21, second insulation layer 22, and second tab 23.

### DETAILED DESCRIPTION

In order to make objects, technical solutions, and advantages of the present disclosure more apparent, technical solutions according to embodiments of the present disclosure will be described clearly and completely below with reference to the accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

Unless otherwise defined, all technical and scientific terms used herein have the same meaning as commonly understood by those skilled in the art of the present disclosure. Terms in the specification of the present disclosure herein are only used for the purpose of describing specific embodiments, and are not intended to limit the present disclosure. In addition, the terms "including" and "having" and any variants thereof as used in the description of the embodiments of the present disclosure, the appended claims, and the above accompanying drawings are intended to cover non-exclusive inclusions. Terms "first", "second", etc. in the embodiments of the present disclosure, the appended claims, and the above accompanying drawings are not intended for the description of a specific order or a priority relationship, but rather distinguish different objects.

Reference herein to "an embodiment" means that a particular feature, structure or characteristic described in combination with the embodiment can be included in at least one embodiment of the present disclosure. The appearance of this phrase in various places in the specification are not necessarily all referring to the same embodiment, nor is it an independent or alternative embodiment that is mutually exclusive of other embodiments.

In the description of the embodiments of the present disclosure, unless specified or limited otherwise, the technical terms "mounted," "connected," "coupled" and "fixed" are understood broadly, such as a fixed connection or a detachable connection or connection as one piece; mechanical connection or electrical connection; direct connection or indirect connection through an intermediate; internal communication of two components. For those skilled in the art, the specific meaning of the above-mentioned terms in the embodiments of the present disclosure can be understood according to specific circumstances.

Terms "and/or" in the present disclosure describes an association relationship between correlated objects, including three relationships. For example, "A and/or B" can mean A only, B only, or both A and B. In addition, the symbol "/" in the present disclosure generally indicates an "or" relationship between the correlated objects preceding and succeeding the symbol.

In the embodiments of the present disclosure, the same reference numerals represent the same components, and detailed descriptions of the same components in different embodiments are omitted for the sake of simplicity. It should be understood that a thickness, a length, a width, and other dimensions of various components in the embodiments of the present disclosure, as well as an overall thickness, length, width, and other dimensions of an integrated device illustrated in the drawings, are only exemplary illustrations and should not constitute any limitation to the present disclosure.

In the present disclosure, "plurality of" means two or more (including two).

The battery mentioned in the embodiments of the present disclosure refers to a single physical module including one or more cells to provide a higher voltage and capacity. When a plurality of battery cells is provided, the plurality of battery cells is connected in series, in parallel, or in series and parallel through an electrical connector.

In some embodiments, the battery may be a battery module. When a plurality of battery cells is provided, the plurality of battery is arranged and fixed to form a battery module.

In some embodiments, the battery may be a battery pack. The battery pack includes a case and a battery cell. The battery cell or the battery module is accommodated in the case.

In some embodiments, the case may be a part of a chassis structure of a vehicle. For example, a part of the case may be at least part of a floor of the vehicle, or a part of the case may be at least part of a transverse beam and a longitudinal beam and of the vehicle.

In some embodiments, the battery may be an energy storage device. The energy storage device includes an energy storage container, an energy storage cabinet, etc.

In the embodiments of the present disclosure, the battery cell may be a secondary battery. The secondary battery refers to a battery cell that can be charged to activate an active material and continue to be used after the battery cell is discharged.

The battery cell may be a lithium ion battery, a sodium ion battery, a sodium lithium ion battery, a lithium metal battery, a sodium metal battery, a lithium sulfur battery, a magnesium ion battery, a nickel hydrogen battery, a nickel cadmium battery, a lead storage battery, etc., which are not limited in the embodiments of the present disclosure.

The battery cell generally includes an electrode assembly. The electrode assembly includes a positive electrode, a negative electrode, and a barrier. During the charging and discharging process of a battery cell, active ions (such as lithium ions) inserted and removed between a positive negative electrode and a negative electrode back and forth. The barrier is disposed between the positive electrode and the negative electrode, which can avoid a short circuit between the positive electrode and the negative electrode and allow the active ions to pass through.

In some embodiments, the positive electrode may be a positive electrode plate. The positive electrode plate may include a positive current collector and a positive active material disposed on at least one surface of the positive current collector.

As an example, the positive current collector has two opposite surfaces in a thickness direction of the positive current collector, and the positive active material is disposed at any one or both of the two opposite surfaces of the positive current collector.

As an example, the positive current collector may use a metal foil or a composite current collector. For example, as the metal foil, silver surface-treated aluminum or stainless steel, stainless steel, copper, aluminum, nickel, carbon electrode, carbon, nickel, or titanium, etc. can be used. The composite current collector may include a polymer material base layer and a metal layer. The composite current collector may be formed by synthesizing a metal material (aluminum, aluminum alloys, nickel, nickel alloys, titanium, titanium alloys, silver, silver alloys, or the like) at a polymer material substrate (a substrate such as polypropylene, polyethylene terephthalate, polybutylene terephthalate, polystyrene, polyethylene).

As an example, the positive active material may include at least one of the following materials: lithium-containing phosphates, lithium transition metal oxides, and their respective modified compounds. However, the present disclosure is not limited to these materials, and other traditional materials that can serve as the positive active material of the battery can also be used.

In some embodiments, the negative electrode may be a negative electrode plate, and the negative electrode plate may include a negative current collector.

As an example, the negative current collector may use a metal foil or a composite current collector. For example, as the metal foil, silver surface-treated aluminum or stainless steel, stainless steel, copper, aluminum, nickel, carbon electrode, carbon, nickel, or titanium, etc. can be used.

In some embodiments, the negative current collector has two opposite surfaces in a thickness direction of the negative current collector, and the positive current collector is provided with a negative active material at any one or both of the two opposite surfaces of the negative current collector.

As an example, the negative active material may be a negative active material for the battery known in the art. As an example, the negative active material may include at least one of the following materials: artificial graphite, natural graphite, soft carbon, hard carbon, silicon-based materials, tin-based materials, lithium titanate, and the like. The silicon-based material may be selected from at least one of elemental silicon, silicon oxide compounds, silicon carbon composites, silicon nitrogen composites, and silicon alloys. The tin-based material may be selected from at least one of elemental tin, tin oxide compounds, and tin alloys. However, the present disclosure is not limited to these materials, and other traditional materials that can serve as the negative active material of the battery can also be used. Only one of these negative active materials may be used alone, or two or more may be used in combination.

In some embodiments, the barrier is a separator. There is no particular restriction on the type of separator in the present disclosure. Any well-known separator of a porous structure and having good chemical stability and mechanical stability can be used.

In some embodiments, the electrode assembly may have a winding structure.
The positive electrode plate and the negative electrode plate are wound into the winding structure.

In some embodiments, the electrode assembly may have a laminated structure.

In some embodiments, the battery cell may include a shell. The shell is configured to encapsulate an electrode assembly, an electrolyte, and other components. The shell may be a steel shell, an aluminum shell, a plastic shell (such as polypropylene), a composite metal shell (such as a copper-aluminum composite shell), an aluminum-plastic film, or the like.

In some embodiments, the shell includes an end cover and a housing. The housing has an opening. The end cover closes the opening to form a confined space for accommodating an electrode assembly, an electrolyte, and other substances. The housing may have one or more openings. One or more end covers may also be provided.

In some embodiments, the shell is provided with at least one electrode terminal, and the electrode terminal is electrically connected to a tab of the electrode assembly. The electrode terminal may be directly connected to the tab, or indirectly connected to the tab through an adapter component. The electrode terminals may be arranged at the end cover or at the housing.

In some embodiments, the shell is provided with an explosion-proof. The explosion-proof valve is configured to release internal pressure of the battery cell.

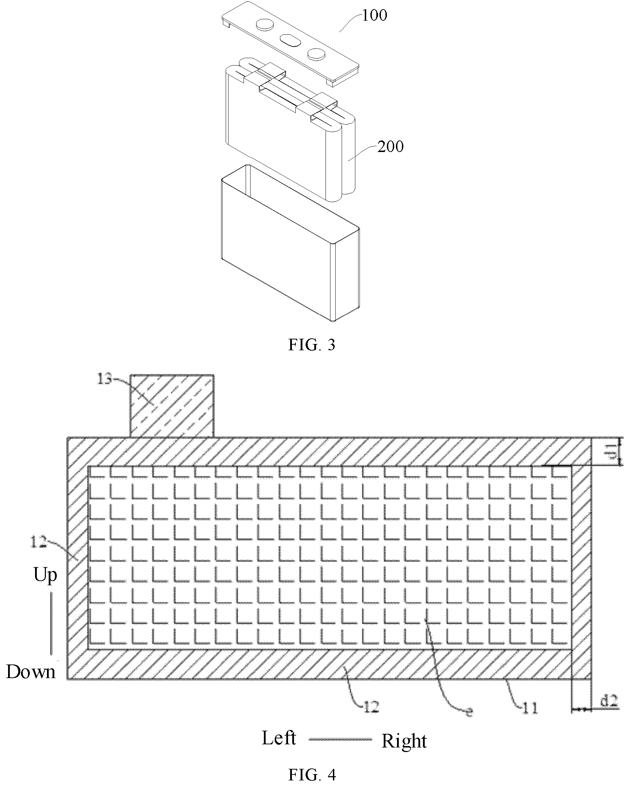

As an example, the battery cell can be a cylindrical battery cell, a prismatic battery cell, a pouch battery cell or a battery cell of other shapes. The prismatic battery cell includes a square shell battery cell, a blade-shaped battery cell, a multi-prismatic battery, for example, a hexagonal prism battery, etc., which are not particularly limited in the embodiments of the present disclosure. Referring to FIG. 3, a square shell battery cell is taken as an example in the embodiments of the present disclosure.

The battery cell includes an electrode assembly. The electrode assembly includes an electrode plate and a barrier. The electrode plate includes a substrate. The substrate is a structural member coated with a metal material. The substrate is usually designed and cut into shaped based on its size. However, during cutting of the substrate, a fin tends to form at an edge of the substrate. After the electrode assembly is fitted and formed, the fin can easily pierce the barrier to be in contact with an electrode plate adjacent to the fin, causing the risk of the short circuit and affecting reliability of the battery cell.

In order to reduce the risk of the short circuit caused by the fin piercing the barrier, it was found that the substrate can be improved. Specifically, a battery cell is provided. The battery cell includes an electrode assembly. The electrode assembly includes a first electrode plate. The electrode plate includes a first substrate. The first substrate 11 includes a first insulation layer at an edge of the first substrate 11.

In the battery cell with the above structure, by disposing the first insulation layer at the edge of the first substrate, the first insulation layer can shield the fin at the edge of the first substrate. Therefore, the problem caused by the fin can be improved, and the risk of the short circuit caused by the fin piercing a barrier is reduced. As a result, the probability of the short circuit in the battery cell is decreased to improve the reliability of the battery cell.

The embodiments of the present disclosure provide an electrical device that uses a battery as a power supply. The electrical device may be, but is not limited to, a mobile phone, a tablet, a laptop, an electric toy, an electric tool, an electric bicycle, an electric motorcycle, an electric vehicle, a ship, a spacecraft, etc. The electric toy can include a fixed or mobile electric toy, such as a game console, an electric car toy, an electric ship toy, an electric airplane toy, etc. The spacecraft can include an airplane, a rocket, a space shuttle, a spaceship, etc.

For convenience of explanation in the following embodiments, an electrical device according to an embodiment of the present disclosure is described using a vehicle as an example.

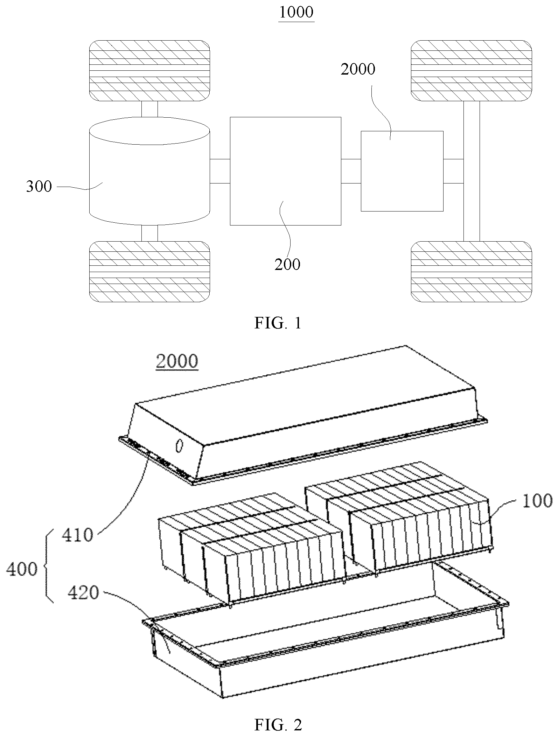

Referring to FIG. 1, FIG. 1 is a schematic structural view of a vehicle according to some embodiments of the present disclosure. The vehicle 1000 may be a fuel vehicle, a gas vehicle, or a new energy vehicle. The new energy vehicle may be a pure electric vehicle, a hybrid vehicle, an extended-range vehicle, etc. The vehicle 1000 is internally provided with a plurality of batteries 100 forming a battery 2000. The battery cell 100 and the battery 2000 may be disposed at a bottom, a head, or a tail of the vehicle 1000. The battery cell 100 and the battery 2000 can configured to supply power to the vehicle 1000. For example, the battery cell 100 can serve as an operating power supply for the vehicle 1000 for a circuit system of the vehicle 1000, for example, to meet operational power consumption requirements for starting, navigation, and driving of the vehicle 1000.

The vehicle 1000 may also include a controller 200 and a motor 300. The controller 200 is configured to control the battery 2000 to supply power to the motor 300, for example, to meet operational power consumption requirements for starting, navigation, and driving of the vehicle 1000.

In some embodiments of the present disclosure, the battery 2000 can not only serve as an operating power supply for the vehicle 1000, but also can serve as a drive power supply for the vehicle 1000 to replace or partially replace fuel or natural gas to provide driving power for the vehicle 1000.

Referring to FIG. 2, FIG. 2 is an exploded view of a battery 2000 according to some embodiments of the present disclosure. The battery 2000 includes a case 400 and a battery cell 100 accommodated in the case 400. The case 400 is configured to provide an accommodation space for the battery cell 100, and the case 400 may have a variety of structures. In some embodiments, the case 400 may include a first part 410 and a second part 420. The first part 410 and the second part 420 fit with each other. The accommodation space configured to accommodate the battery cell 100 is defined by the first part 410 and the second part 420 jointly. The second part 420 may have a hollow structure with one end open, and the first part 410 may have a plate-like structure. The first part 410 covers an open side of the second part 420 to allow the first part 410 and the second part 420 to jointly define the accommodation space. Each of the first part 410 and the second part 420 may also have a hollow structure with one side open, and the open side of the first part 410 covers the open side of the second part 420. Of course, the case 400 formed by the first part 410 and the second part 420 may be in various shapes, such as a cylinder, a cuboid.

In the battery 2000, a plurality of battery cells 100 may be provided to be connected in series, in parallel, or in series and parallel. The expression "in series and parallel" means that the plurality of battery cells 100 is connected both in series and in parallel. The plurality of battery cells 100 may be directly connected in series, or in parallel, or in series and parallel, and then a whole composed of the plurality of battery cells 100 may be accommodated in the case 400. Of course, the battery 2000 may also be in a form where the plurality of battery cells 100 is first connected in series or in parallel or in series and parallel to compose the battery module, the plurality of battery modules is then connected in series or in parallel or in series and parallel to form a whole, and the whole is accommodated in the case 400. The battery 2000 may also include other structures. For example, the battery 2000 may further include a busbar configured for an electrical connection between the plurality of battery cells 100.

Hereinafter, a battery cell 100 according to an embodiment of the present disclosure is described with reference to the drawings.

As illustrated in FIGS. 3 and 4, the battery cell 100 according to the embodiment of the present disclosure includes an electrode assembly 200. The electrode assembly 200 includes a first electrode plate. The first electrode plate includes a first substrate 11. The first substrate 11 includes a first insulation layer 12 at an edge of the first substrate 11.

The first electrode plate may be a positive electrode plate or a negative electrode plate. The first electrode plate includes a first substrate 11. The first substrate 11 may be copper foil, aluminum foil, copper foil with a primer coating added or aluminum foil with a primer coating added. The first substrate 11 is made through cutting. During production and cutting of the first substrate 11, a fin may exist at the edge of the first substrate 11.

The first insulation layer 12 has an insulation effect. The first insulation layer 12 is disposed at the edge of the first substrate 11, and thus can shield the part of the first substrate 11 with the fin. As a result, during a fitting of the electrode assembly 200, since the first insulation layer 12 having the insulation effect is disposed between the fins and a barrier c adjacent to the fin, it is difficult for the fin to pierce the first insulation layer 12 and thus to pierce the barrier c. Therefore, the risk of the short circuit caused by a contact between the fin and the electrode plate adjacent to the fin is reduced, which improves reliability of the battery cell 100.

In addition, in order to reduce cracking of the first insulation layer 12 and the like, the first insulation layer 12 needs to have a certain strength to improve stability of the first insulation layer 12.

The first insulation layer 12 has certain porosity that can be permeable to an electrolyte with low molecular weight, and the electrolyte thus can enter between the first substrate 11 and the barrier c through the first insulation layer 12 for use in a charging reaction and a discharging reaction of the battery cell 100. The porosity herein can be approximately the same as porosity of the barrier c.

In the technical solution of the embodiment of the present disclosure, by disposing the first insulation layer 12 at the edge of the first substrate 11, the first insulation layer 12 can shield the fin at the edge of the first substrate 11. Therefore, the problem caused by the fin can be improved, and a risk of the short circuit caused by the fin piercing a barrier c is reduced. As a result, the probability of the short circuit in the battery is reduced to enhance the reliability of the battery cell 100.

In some embodiments, the first substrate 11 has two opposite sides, one of the two sides is connected to a first tab 13. The first insulation layer 12 is disposed at each of the two opposite sides of the first substrate 11.

As illustrated in FIG. 4, two first insulation layers 12 may be arranged in parallel. One of the two first insulation layers 12 corresponds to a side edge of the first substrate 11 close to the first tab 13, and another one of the two first insulation layers 12 corresponds to a side edge of first substrate 11 opposite to the first tab 13. As illustrated in FIG. 4, the first tab 13 is disposed at an upper side of the first substrate 11, and the two first insulation layers 12 are disposed at the upper side of the first substrate 11 and a lower side of the first substrate 11 respectively, each of the two first insulation layers 12 extends along the edge of the first substrate 11.

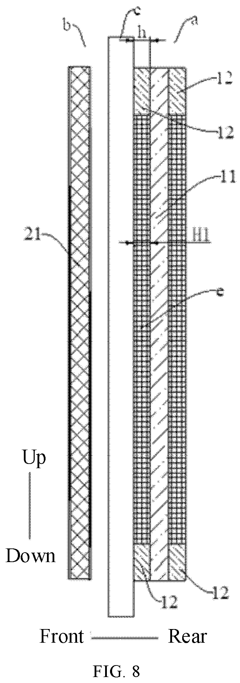

As illustrated in FIG. 8, when the first electrode plate is a positive electrode plate a, during the charging of the battery cell, metal is easily precipitated at the negative electrode plate b, and metal dendrites, which are generated at the edge of the negative electrode plate b, aggregates and pierces the barrier to be in contact with the substrate of the positive electrode plate, causing the short circuit. However, by disposing the first insulation layer 12 at the first substrate 11, the metal dendrites pierce the barrier c and then is in contact with the first insulation layer 11, thereby reducing the probability of the short circuit due to the contact between the metal dendrites and the positive electrode plate a.

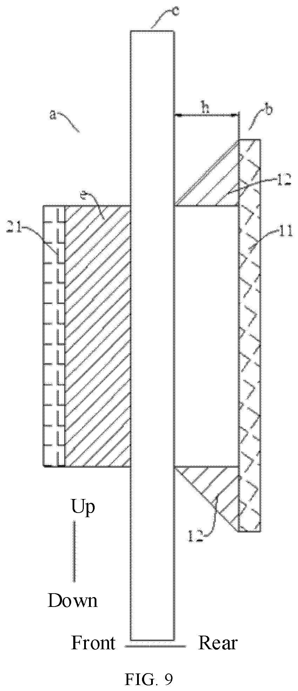

As illustrated in FIG. 9, when the first electrode plate is a negative electrode plate b, during the charging of the battery cell, metal is easily precipitated at the negative electrode plate b. By disposing the first insulation layer 12 at the first substrate 11, metal deposition of the negative electrode plate b can be reduced. The first insulation layer 12 forms the electron blocking that reduces the metal deposition of the metal deposition, which in turn reduces the probability of the short circuit due to the metal deposition-induced contact between the positive negative electrode plate and the negative electrode plate through metal.

In the above technical solution, by disposing the first insulation layer 12 at the side of the first tab 13 and the opposite side of the first tab 13, the probability of the short circuit due to the contact between the positive negative electrode plate and the negative electrode plate, which is caused by the metal deposition of the negative electrode plate at the edge of the negative electrode plate, can be reduced, or the probability of the short circuit due to the contact between the positive plate and the negative electrode plate, which is caused by the dendrites from the metal deposition piercing the barrier, can be reduced to improve the reliability of the battery cell.

In some embodiments, when the battery cell 100 is applied in an electrical device, the first insulation layer 12 is disposed at an edge of an upper side of the first substrate 12 and an edge of a lower side of the first substrate 12.

During an actual application of the battery cell 100, the tab of the electrode assembly 20 may be arranged upwards, downwards, or facing towards one side. However, the metal precipitated during the charging of the battery cell 100 tends to aggregate at the lower side of the electrode plate to form the metal dendrites. The metal has a low melting point and may flow downwards after melting. As such, the first insulation layer 12 is provided at the edge of the upper side of the first substrate 11 and the edge of the lower edge of the first substrate 11.

When the first electrode plate is a positive electrode plate a, after the metal dendrites generated at an upper edge and a lower edge of the negative electrode plate b aggregates, the metal dendrites pierce the barrier to be in contact with the first insulation layer 12 at the positive electrode plate a, thereby reducing the probability of the short circuit due to the contact between the metal dendrites and the positive electrode plate a.

When the first electrode plate is a negative electrode plate b, the first insulation layer 12 forms the electronic blocking that can reduce the metal precipitation at the upper edge and the lower edge of the negative electrode plate b, thereby reducing the probability of the short circuit due to the metal deposition-induced contact between the positive negative electrode plate and the negative electrode plate through metal.

In the above technical solution, during the actual application of the battery cell 100, the metal precipitated during the charging of the battery cell tends to aggregate at the lower side of the electrode plate to form the metal dendrites. By disposing the first insulation layer 12 at the edge of each of the upper side of the first substrate 11 and the lower side of the first substrate 11, the probability of the short circuit due to the contact between the positive negative electrode plate and the negative electrode plate can be reduced. The first insulation layer 12 is disposed at each of the upper edge of the first electrode plate and the lower edge of the first electrode plate, which can be adapted to various placement scenarios of the battery cell 100 applied in the electrical device.

In some embodiments, the first insulation layer 12 is of an annular shape extending along an outer periphery of the first substrate 11.

As illustrated in FIG. 4, the first insulation layer 12 is of an annular shape. The insulation layer of the annular shape, which is disposed at the edge of the first substrate 11, can cover the fin at the entire edge of the first substrate 11, reducing the probability of the fin at the outer edge of the first substrate 11 piercing the barrier c. At the same time, the first insulation layer 12 provides insulation around the entire outer periphery of the first substrate 11.

When the first electrode plate is the positive electrode plate a, after the metal dendrites generated at the edge of the negative electrode plate b aggregate, the metal dendrites pierce the barrier to be in contact with the first insulation layer 12 at the positive electrode plate a, thereby reducing the probability of the short circuit due to the contact between the metal dendrites and the positive electrode plate a.

When the first electrode plate is the negative electrode plate b, the first insulation layer 12 forms a circle of electronic blocking that can reduce the metal precipitation at the periphery of the negative electrode plate b, further reducing the probability of the short circuit due to the metal deposition-induced contact between the positive negative electrode plate and the negative electrode plate through metal.

In the above technical solution, the first insulation layer 12 of the annular shape can improve the problem of cutting the fin on the first substrate 11 on the one hand, and can realize the insulation design of the entire periphery of the first substrate 11 on the other hand, thereby reducing the probability of the short circuit due to the contact between the positive negative electrode plate and the negative electrode plate in a circumferential direction of the first substrate.

In some embodiments, the first insulation layer has a thickness greater than or equal to 0.5 µm.

If a thickness h of the first insulation layer 12 is too small to shield the fin, there remains the risk of the fin piercing the barrier c, causing difficulty in achieving an effective insulation effect. Therefore, the thickness of the first insulation layer 12 is limited to equal to or greater than 0.5 µm, for example, 0.6 µm, 0.7 µm, 0.8 µm, 1 µm, 1.5 µm, 3 µm, 5 µm, 1.5 µm, 10 µm, 30 µm, 60 µm, etc.

In the above technical solution, the first insulation layer 12 can provide an effective and reliable insulation effect.

In some embodiments, the first electrode plate includes an active material layer disposed at the first substrate 11. A ratio of a thickness of the first insulation layer 12 to a thickness of the active material layer ranges from 0.1 to 20.

As illustrated in FIG. 8, the first electrode plate includes an active material layer, the first insulation layer 12 has a thickness h, and the active material layer of the first substrate 11 has a thickness H1. When h is too small, the effect of the first insulation layer 11 is unsatisfying, and it is difficult to achieve in technology. When h is too large, the first electrode plate is prone to curling after being made. Therefore, h/H1 may be limited to between 0.1 to 20, and h/H1 may be 0.1, 20, and any one ranging from 0.1 to 20. For example, h/H1 is 0.5, 1, 2, 3, 4, 5, 6, 7, 8, 9, 10, 11, 12, 13, 14, 15, 16, 17, 18, or 19.

Therefore, the first insulation layer 12 can provide the effective insulation effect. At the same time, the production of the first insulation layer 12 is facilitated, and the probability of the curling of the first electrode plate is reduced.

In some preferred embodiments, the first insulation layer 12 has a thickness smaller than or equal to a thickness of the active material layer of the first substrate 11.

If a thickness h of the first insulation layer 12 is too large, during fitting of the electrode assembly 200, the first insulation layer 12 easily squeezes the barrier c, which may cause damage to the barrier c, etc. As such, the thickness h is limited to the thickness of the active material layer. For example, the first substrate 11 is a positive electrode plate, and the thickness h of the first insulation layer is smaller than or equal to a thickness of the positive active material layer e.

In the above technical solution, when the first substrate 11 cooperates with the barrier c, the first insulation layer 12 cannot squeeze the barrier c, avoiding the damage to the barrier c, etc., thereby improving the reliability of the battery cell 100.

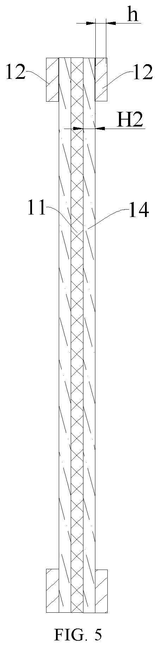

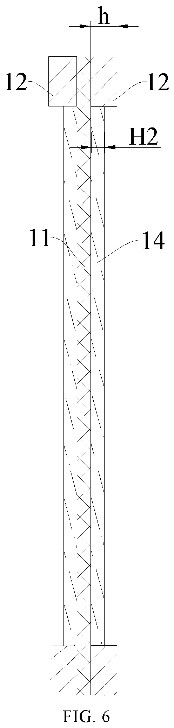

As illustrated in FIGS. 5 and 6, in some embodiments, the first substrate 11 is coated with a conductive coating 14 at a surface of the first substrate 11. A ratio of a thickness of the first insulation layer 12 to a thickness of the conductive coating 14 ranges from 0.1 to 20.

As illustrated in FIGS. 5 and 6, the conductive coating 14 is coated on the surface of the first substrate 11. The conductive coating 14 may be conductive carbon, ethylene black, graphene, etc., and the conductive coating 14 at least corresponds to an active material layer of the positive electrode or an active material layer of the negative electrode. The first insulation layer 12 may be disposed on the conductive coating 14 and may also be disposed at an edge of the conductive coating 14. That is, an inner edge of the first insulation layer 12 abuts with an outer edge of the conductive coating 14.

The first insulation layer 12 has a thickness h, and the conductive coating 14 has a thickness H2. When h is too small, the effect of the first insulation layer 11 is unsatisfying, and it is difficult to achieve in technology. When h is too large, the first electrode plate is prone to curling after being made. Therefore, h/H2 can be limited to between 0.1 and 20, and h/H2 can be 0.1, 20, and any one ranging from 0.1 to 20. For example, h/H1 is 0.5, 1, 2, 3, 4, 5, 6, 7, 8, 9, 10, 11, 12, 13, 14, 15, 16, 17, 18, or 19. Therefore, the first insulation layer 12 can provide the effective insulation effect. At the same time, the production of the first insulation layer 12 is facilitated, and the probability of the curling of the first electrode plate is reduced.

As illustrated in FIGS. 8 to 10, in some embodiments, the electrode assembly 200 further includes a barrier c, and the first insulation layer 12 abuts with the barrier c.

The first insulation layer 12 may abut with the barrier c as a whole, or a part of the first insulation layer 12 may abut with the barrier c, to reduce a gap between the first insulation layer 12 and the barrier c.

When the first electrode plate is the positive electrode plate a, the contact between the fin at the edge of the first substrate 11 and the barrier can be reduced. At the same time, the metal dendrites pierce the barrier and is in direct contact with the first insulation layer 12 at the positive electrode plate a, which further reduces the probability of the short circuit due to the contact between the metal dendrites and the positive electrode plate a, and improves the reliability of the battery cell 100.

When the first electrode plate is the negative electrode plate b, the problem such as the short circuit, which is caused by extrusion of metal deposited at the negative electrode plate from the gap when being squeezed, can be reduced, thereby improving the reliability of the battery cell 100.

In the above technical solution, the gap between the first insulation layer 12 and the barrier c can be reduced to lower an impact on the reliability of the battery cell 100 when the metal deposited at the negative electrode plate is squeezed and extruded from the gap.

In some embodiments, the first insulation layer 12 is connected to the barrier c.

The first insulation layer 12 may be bonded to be connected to the first substrate 11 by an adhesive. The first insulation layer 12 may also be connected to the first substrate 11 through hot melting. The first insulation layer 12 may be made of a thermoplastic material, such as polymers and colloidal materials, can be fused with the first substrate 11 at a high temperature. Thus, the first insulation layer 12 can be better attached to the first substrate 11, which further reduces the risk of the short circuit caused by the extrusion of the metal deposited at the negative electrode plate from between the first insulation layer 12 and the barrier c.

In some examples, the first insulation layer 12 may be connected to the barrier c through adhesion, hot melting, etc., to further improve the reliability of fixing the first insulation layer 12.

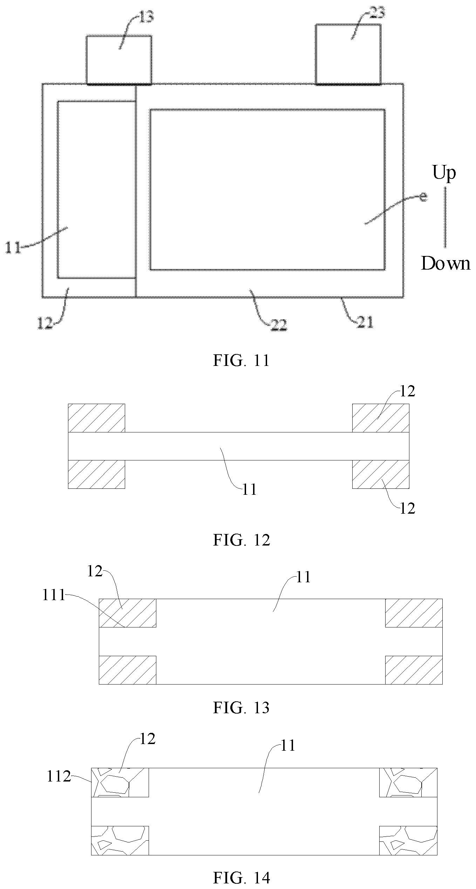

As illustrated in FIG. 12, in some embodiments, the first insulation layer 12 protrudes from a surface of the first substrate 11.

The first insulation layer 12 can be directly hot-melted and bonded to the surface of the first substrate 11, enabling the first insulation layer 12 to protrude from the surface of the first substrate 11. In this way, the gap between the first substrate 11 and the barrier c is reduced, forming the effective electron blocking that reduces the risk of the short circuit due to the contact between the positive negative electrode plate and the negative electrode plate through metal. At the same time, in this way, the formation of the first insulation layer 12 is facilitated.

It should be noted that the surface of the first substrate 11 herein refers to a largest surface of the first substrate 11 close to the barrier c. If a top of a groove or other structural grooves of the first substrate 11 is located at the surface of the substrate 11, a surface of a bottom of the groove does not belong to the surface of the first substrate 11.

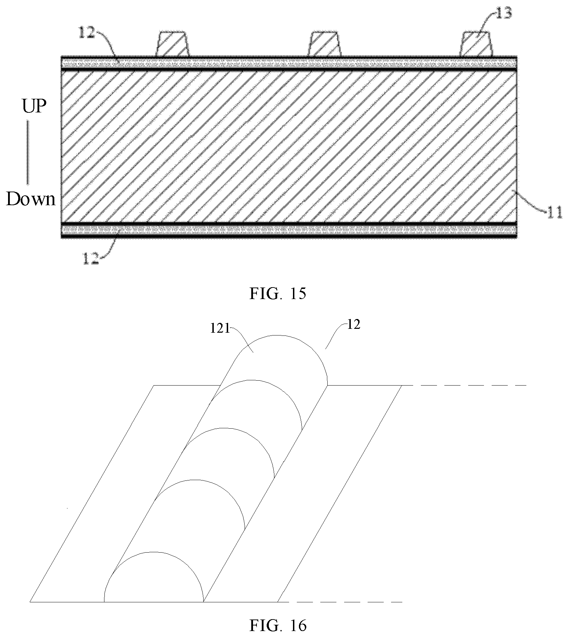

As illustrated in FIG. 16, in some embodiments, the edge of the first insulation layer 12 is connected to the first substrate 11, and the part of the first insulation layer 12 protruding from the first substrate 11 forms a bubble-like cystic structure. That is, the first insulation layer 12 has a boss 121, and the boss 121 may be a cavity, and may also accommodate a material, such as a material that can react with metal. After the metal dendrites or the fin pierces the barrier c, the dendrites or the fin pierces the boss 121, reacts with the material in the boss 121, and then generates non-flammable carbon dioxide, which triggers opening of an explosion-proof valve in advance to provide active safety protection, or reacts and then generates a non-conductive material, thereby reducing the risk of the short circuit.

In some embodiments, the first insulation layer 12 has a thickness gradually decreases in a direction approaching the edge of the first substrate 11.

As illustrated in FIG. 9, the first insulation layer 12 at the upper edge of the first substrate 11 has a thickness gradually decreases from bottom to top, the first insulation layer 12 at the lower edge of the first substrate 11 has a thickness gradually decreases from top to bottom, and the first insulation layer 12 has a side surface close to the barrier c and inclined. As such, on a basis of achieving the effective insulation, a bulging phenomenon caused by the squeezing of the first insulation layer 12 during the production and the fitting of the first insulation layer 12 can be mitigated to improve the structural stability and reliability.

In some embodiments, the first insulation layer 12 is flush with a surface of the first substrate 11.

That is, the surface of the first insulation layer 12 does not protrude from the surface of the first substrate 11, thereby reducing space occupied by the first electrode plate in a thickness direction of the first electrode plate with an improvement in energy density.

In some embodiments, the first substrate 11 has a groove or a hole at the edge of the first substrate 11. An insulation material is poured into the groove or the hole to form the first insulation layer 12.

As illustrated in FIG. 13, a groove 111 is reserved at the edge of the first substrate 11, and the first insulation layer 12 is formed by pouring an insulation material into the groove 111. As illustrated in FIG. 14, a hole is reserved at the edge of the first substrate 11, or punching processing is performed on the edge of the first substrate 11, and the first insulation layer 12 is formed by pouring an insulation material into a hole 112.

In the above technical solution, by reserving the space for the first insulation layer 12 at the first substrate 11, the first insulation layer 12 can be better attached to the first insulation layer 12, in addition to facilitating the formation of the first insulation layer 12 at the first substrate 11.

In some embodiments, the first insulation layer 12 is disposed on each of two surfaces of the first substrate 11 in a thickness direction of the first substrate 12.

As illustrated in FIG. 8, the thickness direction of the first substrate 11 is a front-back direction, and the insulation layer 12 is disposed at each of a side of the first substrate 11 close to the barrier c and a side away from the barrier c. The insulation design for each of the two surfaces of the first substrate 11 can reduce the probability of the short circuit due to the contact between the positive negative electrode plate and the negative electrode plate, which is caused by the fin piercing the barrier c, or the probability of the short circuit due to the contact between the positive negative electrode plate and the negative electrode plate through the metal, to improve the reliability of battery cell.

Especially in a laminated battery, by disposing the first insulation layer 12 at the two sides of the first substrate 11, when the electrode plates are arranged to be stacked to each other, the two sides of the first substrate 11 can be in contact with and engaged with the barrier c adjacent to the first substrate 11 through the first insulation layer 12. In this way, overall reliability can be improved.

In some embodiments, the electrode assembly 200 further includes a second electrode plate. The second electrode plate includes a second substrate 21. An area of the first substrate 11 is equal to an area of the second substrate 21.

Here, the area of the first substrate 11 refers to an area of a largest surface of the first substrate 11, and the area of the second substrate 21 refers to an area of a largest surface of the second substrate 21. By designing the two substrates to be the structural members with the equal areas, the two electrode plates can be easily manufactured into shape. For example, cutters of a same size can be used for cutting. In addition, by designing the substrate of the positive electrode plate a and the substrate of the negative electrode plate in the same size, a proportion of an active material can be increased to improve the energy density.

Of course, when the first electrode plate is the positive electrode plate a and the second electrode plate is the negative electrode plate b, an area of the second substrate 21 can also be larger than the area of the first substrate 11, and the second substrate 21 thus has enough space for accommodating a diffused active material.

In some embodiments, the first insulation layer 12 includes at least one of a ceramic coating, a mica coating, a glass coating, nylon, a plastic film layer composite structure, and a coating of a barrier c.

The first insulation layer 12, which uses at least one of a ceramic coating, a mica coating, and a glass coating, can improve structural strength of the first insulation layer 12 and reduce a cracking risk of the first insulation layer 12. The first insulation layer 12, which uses nylon, can achieve a better insulation effect, and nylon has certain elasticity that facilitates certain deformation. The first insulation layer 12, which has a plastic film layer composite structure, is light in weight and low in cost. As illustrated in FIG. 15, the plastic film layer composite structure may be an aluminum-plastic film, and an edge of the aluminum-plastic film may be connected to the first substrate 11 through heat sealing. The first insulation layer 12, which uses a coating formed at the barrier c, can have certain porosity to allow an electrolyte with low molecular weight to pass through, and thus to enter between the first substrate 11 and the barrier c for use in a charging reaction and a discharging reaction of the battery cell 100.

In some embodiments, the electrode assembly 200 further includes a second electrode plate. The second electrode plate includes a second substrate 21. The first electrode plate is a positive electrode plate a and includes a positive active material layer e. The second electrode plate is a negative electrode plate b. A projection of the positive active material layer e on a plane where the second electrode plate is located falls within the second electrode plate.

On the one hand, disposing the first insulation layer at the substrate of the positive electrode plate a can reduce the probability of the short circuit due to the contact between the positive negative electrode plate and the negative electrode plate, which is caused by the fin at the edge of the substrate of the positive electrode plate a piercing the barrier c to be in contact with the positive electrode plate a. On the other hand, the metal deposited at the negative electrode plate b generates the dendrites to be in contact with the insulation layer when the dendrites are in contact with the positive electrode plate a, which can reduce the risk of the short circuit due to the connection between the positive negative electrode plate and the negative electrode plate through the meal, to improve the reliability of the battery cell 100.

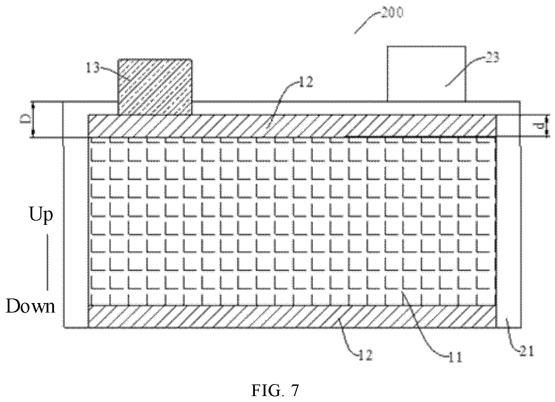

As shown in FIG. 7, in some embodiments, a width of the first insulation layer 12 is d, and a size of an active material of the second electrode plate extending beyond the positive electrode plate a at a side of the first electrode plate where the first insulation layer is disposed is D, where 0.5mm≤d≤D.

Due to a conical diffusion trend of the metal towards the negative electrode plate, with the width of the insulation layer above 0.5 mm, the deposition and the precipitation of the metal on the negative electrode plate can be reduced, and the probability of the short circuit due to the contact between the positive electrode plate and the negative electrode plate. When the first insulation layer 12 is too wide, the active material layer accounts for an excessively small proportion of the electrode plate, leading to excessively low energy density of the battery cell 100. Due to this, the width of the first insulation layer 12 is limited to the part of the second electrode plate extending beyond the positive active material layer e. In this way, the cost is lowered on the basis of reducing the risk of the short circuit, and the problem of low energy density of the battery cell 100 caused by the excessive width of the first insulation layer 12 is reduced, thereby improving the energy density of the battery cell 100.

In some specific examples, when d is smaller than 0.5 mm, a diffusion distance from the metal to the negative electrode plate easily extends beyond the width of the first insulation layer 12, and therefore, the part of the negative electrode plate still faces the problem where the precipitated dendrites pierce the barrier. When d is greater than 9 mm, the active material accounts for an excessively small proportion of the positive electrode plate, leading to excessively low energy density of the battery. Therefore, there is 0.5mm≤d≤9mm, d may be 0.5mm, 1mm, 3mm, 5mm, 6mm, 9mm, etc.

The outer edge of the first insulation layer 12 may be flush with the outer edge of the negative electrode plate b, or the outer edge of the negative electrode plate b may extend beyond the outer edge of the first insulation layer 12, or the outer edge of the first insulation layer 12 may extend beyond the outer edge of the negative electrode plate b. But in this case, a distance between the outer edge of the negative electrode plate b and the inner edge of the first insulation layer 12 is greater than or equal to 1mm to reduce the probability of the short circuit due to the contact between the positive electrode plate and the negative electrode plate, which is caused by the metal dendrites piercing the positive electrode plate a.

In some embodiments, the first substrate 11 further includes a first tab 13 disposed at a side of the first substrate 11 in a first direction. The first insulation layer 12 is of an annular shape extending along an outer periphery of the first substrate 11. A width of the first insulation layer 12 in the first direction is greater than a width of the first insulation layer 12 in a second direction. The second direction is perpendicular to the first direction.

The first direction is an up-down direction as illustrated in FIG. 4, and the second direction is a left-right direction as illustrated in FIG. 4. The first tab 13 is located at the upper side of the first substrate 11, and the first insulation layer 12 includes two parts extending in the left-right direction and two parts extending in the up-down direction. The two parts extending in the left-right direction have a width d1, and the two parts extending in the up-down direction have a width d2. d1 is greater than d2.

Since the metal is deposited at the negative electrode plate after the battery cell 100 is charged, and the metal is likely to flow downwards due to its low melting point. When the tab of the battery cell 100 is arranged upwards or downwards, the wider insulation layer can further provide a protection. However, the insulation layer of the first electrode plate in the left-right direction of the first electrode plate does not need to consider the problem of metal flow. The narrower insulation layer can expand the area of the active material layer in the first electrode plate to further increase the capacity of the battery cell 100, that is, to increase the capacity and energy density as much as possible in the limited space.

In some embodiments, the first substrate 11 has two opposite sides. One of the two sides of the first substrate 11 is connected to a first tab 13. The first insulation layer 12 is disposed at each of the two opposite sides of the first substrate 11. A width of the first insulation layer at a side of the first insulation layer close to the first tab 13 is B1, and a width of the first insulation layer at a side of the first insulation layer away from and opposite to the first tab 13 is B2. A ratio of B1 to B2 ranges from 0.7 to 1.2.

B1/B2 may be 1, that is, B1 may be equal to B2. However, considering manufacturing tolerance, B1/B2 may be limited to between 0.7 and 1.2, thereby preventing the excess width of the insulation layer at one of the upper side and the lower side of the first substrate 11, which results in occupying too much space for the active material layer and lowering in the energy density.

That is, on the basis of achieving the effective insulation protection, the excess width of the first insulation layer 12 is prevented, thereby alleviating the problem of energy density decreased because of too much space occupied by the first insulation layer 12.

In some embodiments, the first substrate 11 has two opposite sides. One of the two opposite sides of the first substrate 11 is connected to a first tab 13. The first insulation layer 12 is disposed at a side of the first substrate 11 close to the first tab 13, an edge of the side of the first substrate 11 close to the first tab 13 is flush with an edge of a side of the second substrate 21 close to the first tab 13; and/or the first insulation layer 12 is disposed at a side of the first substrate 11 away from the first tab 13, an edge of the side of the first substrate 11 away from the first tab 13 is flush with an edge of a side of the second substrate 21 away from the first tab 13.

As illustrated in FIG. 8, in some examples, the first insulation layer 12 is disposed at the upper edge of the first substrate 11, and the upper edge of the first substrate 11 is flush with the upper edge of the second substrate 21. As such, on the basis of achieving the effective insulation, a size of a part of the first substrate 11 in which no first insulation layer 12 is disposed can be enlarged as much as possible to increase the capacity for accommodating the positive active material layer e and improve the energy density.

As illustrated in FIG. 8, in some examples, the first insulation layer 12 is disposed at the lower edge of the first substrate 11, and the lower edge of the first substrate 11 is flush with the lower edge of the second substrate 21. As such, on the basis of achieving the effective insulation, the size of the part of the first substrate 11 in which no first insulation layer 12 is disposed can be enlarged as much as possible to increase the capacity for accommodating the positive active material layer e and improve the energy density.

In the above technical solution, the first insulation layer of the positive electrode plate a may be disposed closer to the edge of the substrate of the negative electrode plate, and a size of a part of the substrate of the positive electrode plate in which no first insulation layer is disposed can be enlarged as much as possible to increase the capacity for accommodating the positive active material layer e and improve the energy density of the battery cell 100.

In some embodiments, the first electrode plate is a negative electrode plate, and the second electrode plate is a positive electrode plate a and includes a positive active material layer e. The first substrate 11 has a size larger than a size of the second electrode plate. The first insulation layer 12 is disposed at a part of the first substrate 11 extending beyond the positive active material layer e.

As shown in FIG. 9, the insulation layer is disposed at the substrate of the negative electrode plate b. On the one hand, the probability of the fin at the edge of the substrate of the negative electrode plate b piercing the barrier c and being in contact with the positive electrode plate a can be reduced, thereby reducing the risk of the short circuit due to the contact between the positive negative electrode plate and the negative electrode plate. On the other hand, the metal deposition at the edge of the substrate of the negative electrode plate b can be reduced. Therefore, the blocking is formed, which reduces the probability of the short circuit due to the contact between the positive negative electrode plate and the negative electrode plate, and improves the reliability of the battery cell 100.

The first insulation layer 12 is disposed at a part of the first substrate 11 extending beyond the positive active material layer e. Here, the first insulation layer 12 may be disposed at the part of the first substrate 11 extending beyond the positive active material layer e. Due to the insulation layer 12, the probability of the metal deposition and the generation of the metal dendrites at the part of the active material of the negative electrode plate extending beyond the positive electrode plate a can be reduced. As a result, the probability of the short circuit due to the contact between the positive electrode plate and the negative electrode plate through the metal is reduced to improve the reliability of the battery cell 100.

In some embodiments, the first insulation layer 12 is disposed at an entire part of the first substrate 11 extending beyond the positive active material layer e.

Both a shape and a size of the first insulation layer 12 are the same as a shape and a size of the part of the substrate of the negative electrode plate b extending beyond the positive active material layer e. As such, the metal deposited at the part of the substrate of the negative electrode plate b extending beyond the positive active material layer e can be effectively reduced, thereby greatly reducing the probability of the short circuit due to the contact between the positive negative electrode plate and the negative electrode plate.

In some embodiments, the electrode assembly 200 further includes a second electrode plate. The second electrode plate includes a second substrate 21. The second substrate 21 includes a second insulation layer 22 at an edge of the second substrate 21.

The second electrode plate has a polarity opposite to a polarity of the first electrode plate. The second electrode plate may be a positive electrode plate or a negative electrode plate. The second electrode plate includes a second substrate 21. The second substrate 21 may be copper foil, aluminum foil, copper foil with a primer coating added or aluminum foil with a primer coating added. The second substrate 21 is made through cutting. During production and cutting of the second substrate 21, a fin may exist at the edge of the second substrate 21.

In addition, since the metal dendrites growing at the negative electrode plate and in contact with the positive electrode plate a, which causes the short circuit, by disposing the insulation layer at the positive electrode plate a, the risk of the short circuit due to the contact between the metal dendrites and the positive electrode plate a can be reduced. By disposing the insulation layer at the negative electrode plate b, the probability of the short circuit due to the contact between the positive negative electrode plate and the negative electrode plate, which is induced by the metal deposition on the negative electrode plate b can be reduced. By disposing the insulation layer at each of the positive electrode plate and the negative electrode plate, a dual anti-short circuit function can be achieved to improve the stability of the battery cell 100.

In the above technical solution, by disposing the second insulation layer 22 at each edge of the second substrate 21, the second insulation layer 22 can shield the fin at the edge of the second substrate 21. Therefore, the problem caused by the fin can be improved, and the risk of the short circuit caused by the fin piercing a barrier c is reduced. Since the insulation layer is disposed at the edge of each of the two substrates, the probability of the short circuit in the battery can be further reduced to improve the reliability of the battery.

A material of the second insulation layer 22 may be the same as a material of the first insulation layer 12, and a method of fixing the second insulation layer 22 to the second substrate 21 may also be the same as the fixing method of the first insulation layer 12, which will not be repeated herein.

In some embodiments, the second insulation layer 22 is of an annular shape extending along an outer periphery of the second substrate 21.

As illustrated in FIG. 11, the second insulation layer 22 is of an annular shape. The insulation layer 12 of the annular shape, which is disposed at the edge of the second substrate 21, can shield the fin at the entire edge of the second substrate 21, reducing the probability of the fin at the outer edge of the second substrate 21 piercing the barrier c. At the same time, the second insulation layer 22 provides insulation around the entire outer periphery of the second substrate 21, reducing the probability of the short circuit due to the contact between the positive electrode plate and the negative electrode plate in the peripheral direction.

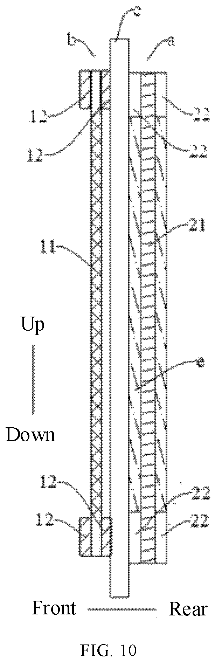

In some embodiments, referring to FIGS. 10 and 11, the first electrode plate is a negative electrode plate, and the second electrode plate is a positive electrode plate a and includes a positive active material layer e. A boundary of a projection of the positive active material layer on the first electrode plate falls within a region of the first substrate 11 where no first insulation layer 12 is disposed.

That is, an area of the region of the first substrate 11 of the first electrode plate where no first insulation layer 12 is disposed is greater than or equal to an area of the positive active material layer e. When the area of the region of the first substrate 11 of the first electrode plate where no first insulation layer 12 is disposed is greater than the area of the positive active material layer e, there is a spacing between a projection of the first insulation layer 12 on the second electrode plate a and a projection of the positive active material layer e on the second electrode plate a. When the area of the region of the first substrate 11 of the first electrode plate where no first insulation layer 12 is disposed is equal to the area of the positive active material layer e, there is no spacing between the projection of the first insulation layer 12 on the second electrode plate a and the projection of the positive active material layer e on the second electrode plate a. As illustrated in FIGS. 10 and 11, the insulation layer is disposed at the substrate of each of the positive electrode plate and the negative electrode plate, which can not only reduce the metal deposition of the negative electrode plate b, but also alleviate the situation where the metal dendrites pierce the barrier to be in contact with the positive electrode plate a, to achieve the dual anti-short circuit function and improve the stability of the battery cell 100. With the size of the part of the substrate of the negative electrode plate b where no first insulation layer is disposed being greater than or equal to the size of the positive active material layer, the negative electrode plate can have enough space to accommodate the diffused active material, and charging operation and discharging operation of the battery cell 100 are reliable.

It should be noted that in the present disclosure, the first electrode plate including the first insulation layer 12 and the second electrode plate including the second insulation layer 22 may be arranged stacked to each other to form an electrode assembly 200 of a laminated battery, or may be arranged through winding to form an electrode assembly 200 of a winding battery. In the winding battery, an insulation layer may be provided at an edge of the entire electrode plate, or a plurality of insulation layers may be arranged based on a number of tabs. In the laminated battery, an insulation layer may be provided at an edge of each electrode plate.

A battery 2000 according to an embodiment in a second aspect of the present disclosure includes the above-mentioned battery cell 100 according to the embodiment in the first aspect of the present disclosure. By using the above-mentioned battery cell 100, it is beneficial to improve reliability of the battery 2000.

An electrical device according an embodiment in a third aspect of the present disclosure includes the above-mentioned battery cell 100 according to the embodiment in the first aspect of the present disclosure. The battery cell 100 is configured to provide electric energy for the electrical device. Therefore, by using the above-mentioned battery cell 100, it is beneficial to improve reliability of the electrical device.

At last, it should be noted that, the above embodiments are only used to illustrate, rather than to limit, the technical solutions of the present disclosure. Although the present disclosure has been described in detail with reference to the above embodiments, those skilled in the art should understand that modifications may be made to the technical solutions described in the above embodiments, or equivalent replacements may be made to some or all of the technical features of the technical solutions described in the above embodiments. However, these modifications or replacements do not cause the essence of corresponding technical solutions to deviate from the scope of the technical solutions of the embodiments of the present disclosure, and shall be included in the scope of the claims and the specification of the present disclosure. In particular, the technical features mentioned in the various embodiments can be combined in any way as long as there are no structural conflicts. The present disclosure is not limited to the specific embodiments disclosed herein, but includes all technical solutions falling within the scope of the claims.

## Claims

1. A battery cell, comprising:
an electrode assembly comprising a first electrode plate, the first electrode plate comprising a first substrate,
wherein the first substrate comprises a first insulation layer at an edge of the first substrate.

2. The battery cell according to claim 1, wherein the first substrate has two opposite sides, one of the two opposite sides being connected to a first tab, and the first insulation layer being disposed at each of the two opposite sides of the first substrate.

3. The battery cell according to claim 1 or 2, wherein when the battery cell is applied in an electrical device, the first insulation layer is disposed at an edge of an upper side of the first substrate and an edge of a lower side of the first substrate.

4. The battery cell according to any one of claims 1 to 3, wherein the first insulation layer is of an annular shape extending along an outer periphery of the first substrate.

5. The battery cell according to any one of claims 1 to 4, wherein the first insulation layer has a thickness greater than or equal to 0.5 µm.

6. The battery cell according to any one of claims 1 to 5, wherein the first electrode plate comprises an active material layer disposed at the first substrate, a ratio of a thickness of the first insulation layer to a thickness of the active material layer ranging from 0.1 to 20.

7. The battery cell according to any one of claims 1 to 6, wherein the first substrate is coated with a conductive coating at a surface of the first substrate, a ratio of a thickness of the first insulation layer to a thickness of the conductive coating ranging from 0.1 to 20.

8. The battery cell according to any one of claims 1 to 7, wherein the electrode assembly further comprises a barrier, the first insulation layer abutting with the barrier.

9. The battery cell of claim 8, wherein the first insulation layer is connected to the barrier.

10. The battery cell according to any one of claims 1 to 9, wherein the first insulation layer protrudes from a surface of the first substrate.

11. The battery cell according to claim 10, wherein the first insulation layer has a thickness gradually decreasing in a direction approaching the edge of the first substrate.

12. The battery cell according to any one of claims 1 to 11, wherein the first insulation layer is flush with a surface of the first substrate.

13. The battery cell according to any one of claims 1 to 12, wherein the first substrate has a groove or a hole at the edge of the first substrate, an insulation material being poured into the groove or the hole to form the first insulation layer.

14. The battery cell according to any one of claims 1 to 13, wherein the first insulation layer is disposed on each of two surfaces of the first substrate in a thickness direction of the first substrate.

15. The battery cell according to any one of claims 1 to 14, wherein the electrode assembly further comprises a second electrode plate, the second electrode plate comprising a second substrate, and an area of the first substrate being equal to an area of the second substrate.

16. The battery cell according to any one of claims 1 to 15, wherein the first insulation layer comprises at least one of a ceramic coating, a mica coating, a glass coating, nylon, a plastic film layer composite structure, and a coating of a barrier.

17. The battery cell according to any one of claims 1 to 16, wherein:
the electrode assembly further comprises a second electrode plate, the second electrode plate comprising a second substrate;
the first electrode plate is a positive electrode plate and comprises a positive active material layer; and
the second electrode plate is a negative electrode plate, a projection of the positive active material layer on a plane where the second electrode plate is located falling within the second electrode plate.

18. The battery cell according to claim 17, wherein the first insulation layer has a width d, and a size of a part of the second electrode plate extending beyond the positive active material layer at a side of the first electrode plate where the first insulation layer is disposed is D, where 0.5mm≤d≤D.

19. The battery cell according to claim 17 or 18, wherein:
the first electrode plate further comprises a first tab disposed at a side of the first substrate in a first direction; and
the first insulation layer is of an annular shape extending along an outer periphery of the first substrate,
wherein a width of the first insulation layer in the first direction is greater than a width of the first insulation layer in a second direction, the second direction being perpendicular to the first direction.

20. The battery cell according to any one of claims 17 or 19, wherein the first substrate has two opposite sides, one of the two opposite sides being connected to a first tab, the first insulation layer is disposed on each of the two opposite sides of the first substrate,
wherein a width of the first insulation layer at a side of the first insulation layer close to the first tab is B1, and a width of the first insulation layer at a side of the first insulation layer away from the first tab is B2, a ratio of B1 to B2 ranging from 0.7 to 1.2.

21. The battery cell according to any one of claims 17 to 20, wherein the first substrate has two opposite sides, one of the two opposite sides of the first substrate being connected to a first tab, wherein:
the first insulation layer is disposed at a side of the first substrate close to the first tab, an edge of the side of the first substrate close to the first tab being flush with an edge of a side of the second substrate close to the first tab; and/or
the first insulation layer is disposed at a side of the first substrate away from the first tab, an edge of the side of the first substrate away from the first tab being flush with an edge of a side of the second substrate away from the first tab.

22. The battery cell according to any one of claims 1 to 16, wherein:
the first electrode plate is a negative electrode plate; and
the electrode assembly further comprises a second electrode plate, the second electrode plate being a positive electrode plate and comprising a positive active material layer, and the first substrate having a size larger than a size of the second electrode plate,
wherein the first insulation layer is disposed at a part of the first substrate extending beyond the positive active material layer.

23. The battery cell according to claim 22, wherein the first insulation layer is disposed at an entire part of the first substrate extending beyond the positive active material layer.

24. The battery cell according to any one of claims 1 to 16, wherein the electrode assembly further comprises a second electrode plate, the second electrode plate comprising a second substrate, and the second substrate comprising a second insulation layer at an edge of the second substrate.

25. The battery cell according to claim 24, wherein the second insulation layer is of an annular shape extending along an outer periphery of the second substrate.

26. The battery cell according to claim 24 or 25, wherein:
the first electrode plate is a negative electrode plate; and
the second electrode plate is a positive electrode plate and comprises a positive active material layer, a boundary of a projection of the positive active material layer on the first electrode plate falling within a region of the first substrate where no first insulation layer is disposed.

27. A battery, comprising the battery cell according to any one of claims 1 to 26.

28. An electrical device, comprising the battery cell according to any one of claims 1 to 26, wherein the battery cell is configured to provide electric energy.
